# EUROPÄISCHE PATENTSCHRIFT

(11) **EP 2 812 659 B1**
(45) Veröffentlichungstag und Bekanntmachung des Hinweises auf die Patenterteilung: **04.03.2020**
(21) Anmeldenummer: 13703544.0
(22) Anmeldetag: 29.01.2013
(51) Int. Cl.: G01F 1/66

(54) **ULTRASCHALL-DURCHFLUSSMESSGERÄT UND VERFAHREN ZUR ERMITTLUNG DER FLIESSGESCHWINDIGKEIT BZW. DES VOLUMENDURCHFLUSSES EINES FLUIDS**
ULTRASONIC FLOWMETER AND METHOD FOR DETERMINING THE FLOW SPEED AND/OR THE VOLUMETRIC FLOW OF A FLUID
DÉBITMÈTRE À ULTRASONS ET PROCÉDÉ DESTINÉS À DÉTERMINER LA VITESSE D'ÉCOULEMENT OU ENCORE LE DÉBIT VOLUMIQUE D'UN FLUIDE

(30) Priorität: 10.02.2012 DE 102012101098
(43) Veröffentlichungstag der Anmeldung: 17.12.2014
(73) Patentinhaber: Endress+Hauser Flowtec AG, 4153 Reinach (BL) (CH)
(72) Erfinder: WIEST, Achim, 79576 Weil am Rhein (DE); GRUNWALD, Sascha, 79585 Steinen (DE); BERGER, Andreas, 79686 Hasel-Glashütten (DE); BRUMBERG, Oliver, 79618 Rheinfelden (DE)
(74) Vertreter: Andres, Angelika Maria
(86) Internationale Anmeldenummer: PCT/EP2013/051645
(87) Internationale Veröffentlichungsnummer: WO 2013/117457

(56) Entgegenhaltungen:
- WO-A1-2006/063873
- DE-A1-102006 023 478
- DE-A1-102006 023 479
- US-A1- 2004 129 088

## Beschreibung

Die Erfindung betrifft ein Ultraschall-Durchflussmessgerät nach dem Oberbegriff des Anspruchs 1 und ein Verfahren zur Ermittlung der Fließgeschwindigkeit bzw. des Volumendurchflusses eines Fluids nach dem Oberbegriff des Anspruchs 10. Ein solches Gerät und ein solches Verfahren sind z.B. aus DE 10 2006 023 478 A1 und DE 10 2006 023 479 A1 bekannt.

Das Patent US 7,360,447 B2 offenbart ein Ultraschalldurchflussmessgerät, bei welchem ein akustisches Signal durch konkave Reflektoren reflektiert wird. Dabei werden die akustischen Signale parallel zur Strömungsrichtung des Fluids ausgesandt.

Ein Ultraschalldurchflussmessgerät, welches nach dem Laufzeitdifferenzprinzip arbeitet, ist an sich bekannt und wird beispielsweise DE 10 2011 079 250 A1 beschrieben. Diese Druckschrift offenbart ein Ultraschall-Durchflussmessgerät mit einem Sender und einem Empfänger, welche in oder an einem Messrohr angeordnet sind. Der Sender sendet ein akustisches Signal aus, welches an einer oder mehreren Reflexionsflächen reflektiert wird und anschließend auf einen Empfänger trifft. Dieses Ultraschall-Durchflussmessgerät hat sich grundsätzlich bewährt. Bei höheren Strömungsgeschwindigkeiten wurde allerdings eine Verringerung der Signalintensität beobachtet, da das akustische Signal durch die hohe Strömungsgeschwindigkeit des Fluids verweht wird und dadurch nur teilweise durch den Sensor erfasst werden kann.

Es ist daher die Aufgabe der vorliegenden Erfindung ein Ultraschallmessgerät mit geschwindigkeitskompensierter Strahlführung zu schaffen, sowie ein Verfahren, welches einer Signalschwächung durch Verwehungen entgegenwirkt.

Diese Aufgabe wird durch ein Ultraschall-Durchflussmessgerät mit den Merkmalen des Anspruchs 1 und ein Verfahren mit den Merkmalen des Anspruchs 10 gelöst.

Das erfindungsgemäße Ultraschall-Durchflussmessgerät zur Ermittlung der Fließgeschwindigkeit bzw. des Volumendurchflusses eines Fluids im Laufzeitdifferenzverfahren, insbesondere eines Gases oder einer Flüssigkeit, umfasst ein Messrohr mit einer geraden Messrohrachse; zumindest einen ersten Wandler zum Senden eines akustischen Signals, zumindest einen zweiten Wandler zum Empfangen des akustischen Signals und zumindest eine Reflexionsfläche zur Reflexion des akustischen Signals umfasst, wobei der erste Wandler und der zweite Wandler derart an der Rohrwandung des Messrohres angeordnet sind, dass sie das akustische Signal schräg oder senkrecht zur Strömungsrichtung (A) des Fluids aussenden bzw. empfangen, wobei das akustische Signal zwischen dem ersten Wandler und dem zweiten Wandler entlang eines Signalpfads verläuft, welcher eine Reflexion an der mindestens einen Reflexionsfläche umfasst, wobei erfindungsgemäß die mindestens eine Reflexionsfläche in zumindest einer Vorzugsrichtung im Messrohr konkav ausgebildet ist.

Die Vorzugsrichtung kann insbesondere die axiale Richtung, also die Längsrichtung des Messrohrs umfassen.

Bei dem akustischen Signal handelt es sich vorzugsweise um ein Ultraschallsignal.

Aufgrund der konkaven Ausbildung der Reflexionsfläche in Richtung der Messachse, werden akustische Signale, welche ansonsten auf die flache Reflexionsfläche der Innenwandung des Messrohres treffen würden, abgelenkt. Dadurch kann die Verwehung eines akustischen Signals in oder gegen die Strömungsrichtung des Fluids ausgeglichen werden und somit eine Geschwindigkeitskompensierung der Strahlenführung erreicht werden. Vorteilhafte Ausgestaltungen der Erfindung sind Gegenstand der Unteransprüche.

Die Reflexionsfläche ist vorzugsweise als konkaver Hohlspiegel ausgebildet.

Es ist besonders von Vorteil, wenn im Messrohr mehrere Reflexionsflächen zur Mehrfachreflexion des akustischen Signals angeordnet sind, so dass beispielsweise eine mittlere Fließgeschwindigkeit genauer bestimmbar ist. Mit der Zahl der Reflexionen im Messrohr steigt allerdings die Mess-Strecke bzw. die Länge des Signalpfads und damit das Ausmaß der Verwehungen. Daher ist es besonders von Vorteil, wenn eine entsprechende Geschwindigkeitskompensation durch die konkave Reflexionsfläche, insbesondere bei Mehrfachreflexion an jedem Reflexionspunkt im Messrohr erfolgt.

Für eine bessere Wartung oder auch für eine leichtere Zugänglichkeit im Defektfall ist erfindungsgemäß die Reflexionsfläche als Bauteil ausgebildet, welches lösbar in das Messrohr eingebracht ist.

Alternativ ist mindestens eine konkav ausgebildete Reflexionsfläche als Bauteil ausgebildet, welches mit dem Messrohr gefügt ist, wobei das Fügen insbesondere Schweißen, Löten oder Kleben umfasst. Dies ist aber nicht beansprucht.

Alternativ ist mindestens eine konkav ausgebildete Reflexionsfläche einstückig mit dem Messrohr gebildet. Dies ist aber nicht beansprucht.

Durch das Ultraschall-Durchflussmessgerät sind gemäß einer Weiterbildung der Erfindung insbesondere auch akustische Signale bei einem Verhältnis (v_{F}/c) einer Strömungsgeschwindigkeit v_{F} des Fluid zu einer Geschwindigkeit c des akustischen Signals im Fluid von mehr als 0,1% in vorteilhafter Weise erfassbar. Ein derartiges Verhältnis tritt insbesondere bei Gasen oder sehr schnell fließenden Flüssigkeiten auf. Für derartig schnellfließende Fluide kann das beschriebene Ultraschallmessgerät vorteilhaft verwendet werden, ohne dass es zu einer signifikanten Schwächung des akustischen Signals kommt.

Zusätzlich zur Geschwindigkeitskompensation sind gemäß einer Weiterbildung der Erfindung die akustischen Signale durch die konkave Reflexionsfläche fokussierbar. Dadurch kann die durch den Empfänger detektierte Signalintensität vorteilhaft verbessert werden.

Gemäß einer Weiterbildung der Erfindung sind der erste Wandler und der zweite Wandler jeweils als Ultraschallwandler zum Erzeugen und zum Empfangen von akustischen Signalen ausgebildet.

Gemäß eine Weiterbildung der Erfindung weist das Ultraschall-Durchflussmessgerät mehrere Reflexionsflächen mit konkaver Kontur auf, wobei ein erster Krümmungsradius im Zentrum einer ersten Reflexionsfläche in einer ersten Reflexionsebene einer Reflexion eines idealisierten Signalpfads an der ersten Reflexionsfläche von einem zweiten Krümmungsradius im Zentrum einer zweiten Reflexionsfläche in einer zweiten Reflexionsebene einer Reflexion des idealisierten Signalpfads an der zweiten Reflexionsfläche abweicht, wobei der idealisierte Signalpfad jeweils geradlinig zwischen den Zentren von Sende- bzw. Empfangsflächen der Ultraschallwandler und den Zentren der Reflexionsflächen verläuft.

Gemäß einer Weiterbildung der Erfindung weist mindestens eine Reflexionsfläche eine konkave, parabolische Kontur aufweist.

Gemäß einer Weiterbildung der Erfindung weicht ein erster Krümmungsradius im Zentrum mindestens einer ersten Reflexionsfläche in einer ersten Reflexionsebene eines idealisierten Signalpfads einer Reflexion an der ersten Reflexionsfläche von einem zweiten Krümmungsradius im Zentrum der ersten Reflexionsfläche in einer zweiten Ebene welche senkrecht zur ersten Reflexionsebene verläuft, und in welcher die Oberflächennormale der ersten Reflexionsfläche im Zentrum der ersten Reflexionsfläche liegt, abweicht.

In einer Weiterbildung der Erfindung weisen mindestens zwei Reflektionsflächen voneinander abweichende Flächenmaße auf.

In einer Weiterbildung der Erfindung weist mindestens eine Reflexionsfläche in einer Vorzugsrichtung eine größere Erstreckung auf als in andere Richtungen.

In einer Weiterbildung der Erfindung ist mindestens eine Reflexionsfläche in Richtung der Strömung stärker ausgebildet. D.h. insbesondere, dass der Abstand der mindestens einen Reflexionsfläche zur Rohrmittelachse mit der Strömungsrichtung abnimmt.

Erfindungsgemäß umfasst ein Verfahren zur Ermittlung der Fließgeschwindigkeit eines Fluids im Laufzeitdifferenzmessverfahren, insbesondere eines Gases oder einer Flüssigkeit, mittels Ultraschalldurchflussmessung in einem Messrohr mit gerader Messrohrachse, die folgenden Schritte:
a) Aussenden zumindest eines akustischen Signals schräg oder senkrecht zur Strömungsrichtung des Fluids durch einen Sender;
b) Reflektieren des akustischen Signals an einer oder mehreren konkaven Reflexionsflächen und
c) Empfangen und Auswerten des akustischen Signals zur Ermittlung der Fließgeschwindigkeit des Fluids.

Durch die Reflexion an einer oder mehreren konkaven Reflexionsflächen wird die Signalabschwächung durch Verwehungen des Signals im Wesentlichen kompensiert dies kann einerseits durch Änderung des Ausfallwinkels erfolgen und andererseits durch Fokussierung des akustischen Signals.

Nachfolgend wird die Erfindung anhand der Zeichnungen näher erläutert. Sie zeigen:
- Fig. 1: eine geschnittene Seitenansicht einer schematischen Darstellung eines erfindungsgemäßen Ultraschall-Durchflussmessgerätes bei Einfachreflexion;
- Fig. 2: eine geschnittene Seitenansicht über einen Signalverlauf bei Mehrfachreflexion in einem Messrohr eines erfindungsgemäßen Ultraschall-Durchflussmessgerätes;
- Fig. 3: eine Vorderansicht mit einem Signalverlauf bei Mehrfachreflexion in einem Messrohr eines erfindungsgemäßen Ultraschall-Durchflussmessgerätes; und
- Fig. 4: eine geschnittene Seitenansicht einer schematischen Darstellung eines Ultraschall-Durchflussmessgerätes bei Einfachreflexion nach dem Stand der Technik.

Ein Laufzeitdifferenzmessverfahren zur Bestimmung von Fließgeschwindigkeiten eines Fluids ist an sich bekannt. Beim Laufzeitdifferenz-Prinzip werden die unterschiedlichen Laufzeiten von Ultraschallimpulsen relativ zur Strömungsrichtung des Fluids ausgewertet. Dabei wird die Ausbreitungsgeschwindigkeit von akustischen Signalen, insbesondere von Ultraschallwellen in einem Medium von dessen Fliessgeschwindigkeit direkt beeinflusst wird. Hierfür werden Ultraschallimpulse sowohl in wie auch entgegen der Strömung gesendet. Aus der Laufzeitdifferenz lässt sich die Fliessgeschwindigkeit und damit bei bekanntem Durchmesser des Rohrleitungsabschnitts der Volumendurchfluss bestimmen.

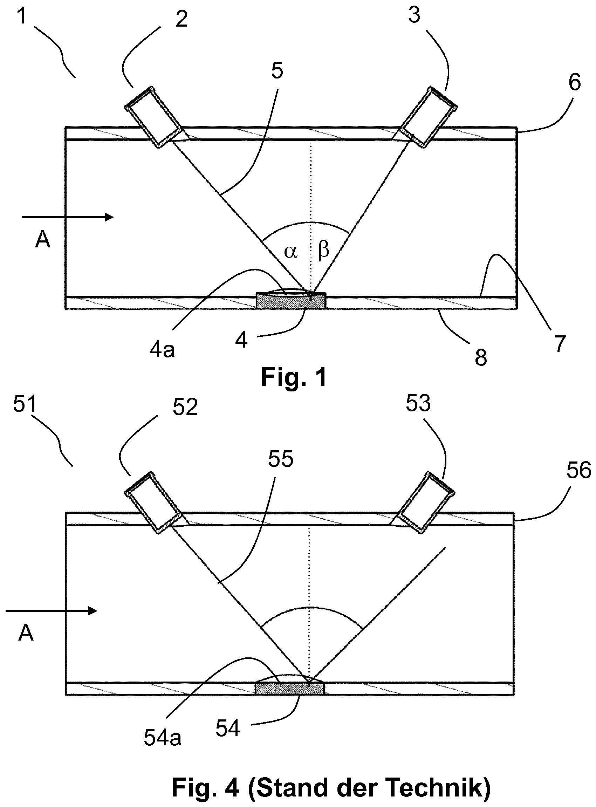

Fig.4 zeigt schematisch Ultraschall-Durchflussmessgerät 51 nach dem Stand der Technik und eine darin erfolgende Ablenkung eines akustischen Signals 55, das von einem ersten Wandler 52 zu einem zweiten Wandler 52 gelangen soll. Die dargestellte Ablenkung der Achse des Signalpfades tritt beim Durchleiten durch ein Fluid auf, welches beispielsweise in einem Messrohr 56 mit einem Innendurchmesser von etwa 52 mm und einer Fließgeschwindigkeit von etwa 150 m/s in Strömungsrichtung A fließt. Die Schallgeschwindigkeit in diesem Medium beträgt 1500 m/s. Wie man anhand von Fig. 4 erkennen kann, findet bereits bei einer Reflexion an einer ebenen Reflexionfläche 54a einer Reflexionsanordnung 54 eine Verwehung des akustischen Signals 55 statt, die zu einer signifikanten unerwünschten Schwächung des zum zweiten Wandler 53 gelangenden Signals führt.

Fig.1 zeigt - hier lediglich schematisch - den Aufbau einer ersten Variante eines erfindungsgemäßen Ultraschallmessgerätes 1.

Dieses Ultraschallmessgerät weist ein Messrohr 6 auf. Dieses Messrohr 6 verfügt über eine Außenwandung 8 und eine Innenwandung 7. Das Messrohr 6 weist zudem einen ersten Wandler 2 auf, zum Erzeugen eines akustischen Signals 5, welcher als Ultraschallwandler ausgebildet ist, und einen zweiten Wandler 3, zur Detektion des akustischen Signals 5, welcher ebenfalls als Ultraschallwandler ausgebildet ist.

Dieses akustische Signal 5 wird in Fig. 1 in Strömungsrichtung A ausgesandt.

Der zweite Wandler 3 kann ebenfalls, hier nicht dargestellt, ein akustisches Signal entgegen der Strömungsrichtung A des Fluids aussenden, welches vom ersten Wandler 2 detektiert werden kann. Aus der Laufzeitdifferenz beider Signale kann die Fließgeschwindigkeit des Fluids bzw. dessen Volumendurchfluss ermittelt werden.

Messrohr 6 weist zudem eine Reflektoranordnung 4 mit einer Reflexionsflächen 4a auf, welche hier im konkreten Fall als konkaver Hohlspiegel ausgebildet ist. Dieser Hohlspiegel ermöglicht eine Korrektur der Verwehung des akustischen Signals, derart, dass der Einfallswinkel α des akustischen Signals 5, bezogen auf eine zur Rohrlängsachse senkrechte Ebene, einen anderen Betrag aufweist als der Ausfallswinkel β des akustischen Signals 5 nach dessen Reflexion an der Reflexionsfläche 4a.

Durch diese spezielle Reflexionsfläche 4a kann eine Verwehung des akustischen Signals 5 in Strömungsrichtung A ausgeglichen werden. Die Verwehung des akustischen Signals 5 kann sowohl in Strömungsrichtung A oder entgegen Strömungsrichtung A erfolgen. Unabhängig von der Strömungsrichtung A wird durch die spezielle Reflexionsfläche 4A ein vollständiger oder zumindest ein teilweiser Ausgleich zu der besagten Verwehung erreicht.

Bei dem hier dargestellten gleichmäßig konkav ausgebildeten Hohlspiegel liegt die optische bzw. akustische Achse vorteilhaft an dem Punkt, bei welchem das akustische Signal 5 auftreffen würde, sofern es zu keiner Ablenkung des akustischen Signals 5 entlang des Signalpfades kommen würde, bzw. bei dem sich das im Messrohr 6 befindliche Fluid sich im Stillstand befinden würde.

Die Reflektoranordnung 4 mit der Reflexionsfläche 4a oder -flächen kann insbesondere als Bauteil an der Innenwandung 7 des Messrohrs 6 angebracht oder eingebracht sein. So können derartige Bauteile 4 beispielsweise durch Formenschluss mittels Schraub- oder Bajonettverbindungen lösbar in das Messrohr 6 eingebracht oder fest gefügt werden, beispielsweise durch Löten oder Schweißen. Dies ist aber nicht beansprucht.

Das akustische Signal 5 kann schräg oder senkrecht zur Strömungsrichtung A des Fluids in das Messrohr 6 ausgesandt werden.

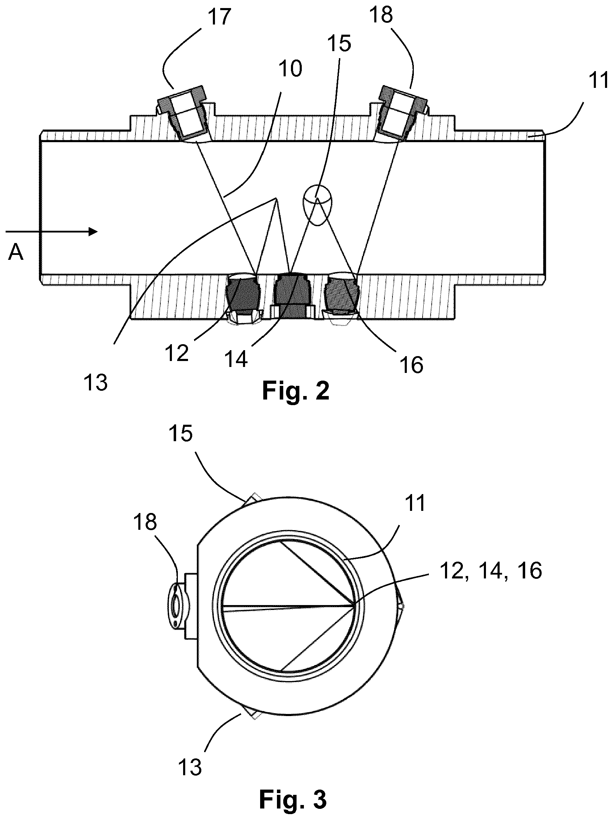

Fig.2 und 3 zeigt einen Signalverlauf eines akustischen Signals 10 bei dessen Mehrfachreflexion in einem Messrohr 11 eines zweiten Ausführungsbeispiels eines erfinungsgemäßen Durchfluss-Messgerätes. Dabei wird in der hier dargestellten Variante der Erfindung das akustische Signal durch einen ersten Ultraschallwandler 17 ausgesandt, an einer jeder Reflexionfläche 12 - 16 einer Reflektoranordnung mit mehreren Reflexionsflächen 12-16 reflektiert und anschließend durch einen zweiten Ultraschallwandler 18 detektiert.

Aufgrund der konkaven Krümmung der Reflexionsflächen 12 - 16 wird die Ablenkung bzw. Verwehung des akustischen Signals 10 entlang des jeweiligen Signalpfades, welche durch die Strömung des Fluids hervorgerufen wird, ausgeglichen.

Durch die in Fig.2 und 3 abgebildete Mehrfachreflexion kann die Messgenauigkeit zur Ermittlung der mittleren Fließgeschwindigkeit des Fluids vorteilhaft verbessert werden.

### Bezugszeichenliste

- 1: Ultraschalldurchfluss-Messgerät
- 2: Erster Wandler (Sender)
- 3: Zweiter Wandler (Empfänger)
- 4: Reflektoranordnung
- 4a: Reflexionsfläche
- 5: akustisches Signal
- 6: Messrohr
- 7: Innenwandung
- 8: Außenwandung
- 10: akustisches Signal
- 11: Messrohr
- 12: Relflexionsfläche
- 13: Reflexionsfläche
- 14: Reflexionsfläche
- 15: Reflexionsfläche
- 16: Reflexionsfläche
- 17: Erster Wandler (Sender)
- 18: Zweiter Wandler (Empfänger)

- A: Strömungsrichtung
- α: Einfallswinkel
- β: Ausfallswinkel

## Patentansprüche

1. Ultraschall-Durchflussmessgerät (1) zur Ermittlung der Fließgeschwindigkeit bzw. des Volumendurchflusses eines Fluids im Laufzeitdifferenzverfahren, insbesondere eines Gases oder einer Flüssigkeit, welches ein Messrohr (6, 11) mit einer geraden Messrohrachse, zumindest einen ersten Wandler (2, 17) zum Senden eines akustischen Signals (5, 10), zumindest einen zweiten Wandler (3, 18) zum Empfangen des akustischen Signals (5, 10) und zumindest eine Reflexionsfläche (4a, 12-16) zur Reflexion des akustischen Signals umfasst, wobei der erste Wandler (2, 17) und der zweite Wandler (3, 18) derart an der Rohrwandung des Messrohres (6, 11) angeordnet sind, dass sie das akustische Signal (5, 10) schräg oder senkrecht zur Strömungsrichtung (A) des Fluids aussenden bzw. empfangen, wobei das akustische Signal zwischen dem ersten Wandler und dem zweiten Wandler entlang eines Signalpfads verläuft, welcher eine Reflexion an der mindestens einen Reflexionsfläche (4a, 12-16) umfasst, **dadurch gekennzeichnet, dass** die mindestens eine Reflexionsfläche (4a, 12-16) in zumindest einer Vorzugsrichtung im Messrohr konkav ausgebildet ist,
wobei mindestens eine konkav ausgebildete Reflexionsfläche (4a, 12-16) als Bauteil (4) ausgebildet ist, welches lösbar in das Messrohr (5) eingebracht ist und
wobei die Wandler in einer ersten und einer zweiten Öffnung des Messrohres festgelegt sind und wobei das Bauteil in einer dritten räumlich von der ersten und der zweiten Öffnung getrennten Öffnung festgelegt ist.

2. Ultraschall-Durchflussmessgerät nach Anspruch 1, **dadurch gekennzeichnet, dass** im Messrohr (6, 11) mehrere Reflexionsflächen (12-16) zur Mehrfachreflexion des akustischen Signals (10) angeordnet sind, wobei zumindest eine Reflexionsfläche (12-16) konkav ausgebildet ist.

3. Ultraschall-Durchflussmessgerät nach Anspruch 2, **dadurch gekennzeichnet, dass** alle Reflexionsflächen (12-16) konkav ausgebildet sind.

4. Ultraschall-Durchflussmessgerät nach einem der vorhergehenden Ansprüche, **dadurch gekennzeichnet, dass** akustische Signale (5, 10) bei einem Verhältnis (v_{F}/c) einer Strömungsgeschwindigkeit v_{F} des Fluid zu einer Geschwindigkeit c des akustischen Signals im Fluid von mehr als 0,1% erfassbar sind.

5. Ultraschall-Durchflussmessgerät nach einem der vorhergehenden Ansprüche, **dadurch gekennzeichnet, dass** akustische Signale (5, 10) bei einem Verhältnis (v_{F}/c) einer Strömungsgeschwindigkeit v_{F} des Fluid zu einer Geschwindigkeit c des akustischen Signals im Fluid von mehr als 1% mit Schwächung des Signals (5, 10) von weniger als 20% insbesondere weniger als 10% erfassbar sind.

6. Ultraschall-Durchflussmessgerät nach einem der vorhergehenden Ansprüche, **dadurch gekennzeichnet, dass** der erste Wandler (2, 17) und der zweite Wandler (3, 18) jeweils als Ultraschallwandler zum Erzeugen und zum Empfangen von akustischen Signalen (5, 10) ausgebildet sind.

7. Ultraschall-Durchflussmessgerät nach einem der vorhergehenden Ansprüche, welches mehrere Reflexionsflächen mit konkaver Kontur aufweist, wobei ein erster Krümmungsradius im Zentrum einer ersten Reflexionsfläche in einer ersten Reflexionsebene einer Reflexion eines idealisierten Signalpfads an der ersten Reflexionsfläche von einem zweiten Krümmungsradius im Zentrum einer zweiten Reflexionsfläche in einer zweiten Reflexionsebene einer Reflexion des idealisierten Signalpfads an der zweiten Reflexionsfläche abweicht, wobei der idealisierte Signalpfad jeweils geradlinig zwischen den Zentren von Sende- bzw. Empfangsflächen der Ultraschallwandler und den Zentren der Reflexionsflächen verläuft.

8. Ultraschall-Durchflussmessgerät nach einem der vorhergehenden Ansprüche, wobei mindestens eine Reflexionsfläche eine konkave, parabolische Kontur aufweist.

9. Ultraschall-Durchflussmessgerät nach einem der vorhergehenden Ansprüche, wobei ein erster Krümmungsradius im Zentrum einer ersten Reflexionsfläche in einer ersten Reflexionsebene eines idealisierten Signalpfads einer Reflexion an der ersten Reflexionsfläche von einem zweiten Krümmungsradius im Zentrum der ersten Reflexionsfläche in einer zweiten Ebene welche senkrecht zur ersten Reflexionsebene verläuft, und in welcher die Oberflächennormale der ersten Reflexionsfläche im Zentrum der ersten Reflexionsfläche liegt, abweicht.

10. Verfahren zur Ermittlung der Fließgeschwindigkeit bzw. des Volumendurchflusses eines Fluids im Laufzeitdifferenzmessverfahren, mittels eines Ultraschall-Durchflussmessgerätes nach einem der vorhergehenden Ansprüche, mittels Ultraschalldurchflussmessung in einem Messrohr (6, 11) mit gerader Messrohrachse, **gekennzeichnet durch** die folgenden Schritte:
a) Aussenden zumindest eines akustischen Signals (5, 10) schräg oder senkrecht zur Strömungsrichtung (A) des Fluids durch einen Sender (2, 17);
b) Reflektieren des akustischen Signals (5, 10) an einer oder mehreren konkaven Reflexionsflächen (4a, 12-16) und
c) Empfangen und Auswerten des akustischen Signals (5, 10) zur Ermittlung der Fließgeschwindigkeit des Fluids.

11. Verfahren nach Anspruch 10, **dadurch gekennzeichnet, dass** durch das Reflektieren des akustischen Signals (5, 10) an einer oder mehreren konkaven Reflexionsflächen (4a, 12-16) eine Ablenkung des akustischen Signals (5, 10) erfolgt, derart, dass
des Einfallswinkel α des akustischen Signals (5, 10) vor der Reflexion und
der Ausfallswinkel β des akustischen Signals (5, 10) nach der Reflexion, bezogen auf die Innenwandung (7) des Messrohres (6), voneinander verschieden sind.

12. Verfahren nach Anspruch 10 oder 11, **dadurch gekennzeichnet, dass** durch das Reflektieren des akustischen Signals (5, 10) an einer oder mehreren konkaven Reflexionsflächen (4a, 12-16) eine Fokussierung des akustischen Signals (5, 10) erfolgt.

13. Ultraschall-Durchflussmessgerät nach einem der Ansprüche 1 bis 9, wobei mindestens zwei Reflektionsflächen voneinander abweichende Flächenmaße aufweisen.

14. Ultraschall-Durchflussmessgerät nach einem der Ansprüche 1 bis 9 und 13, **dadurch gekennzeichnet, dass** mindestens eine Reflexionsfläche in einer Vorzugsrichtung eine größere Erstreckung aufweist als in andere Richtungen.

15. Ultraschall-Durchflussmessgerät nach einem der Ansprüche 1 bis 9, 13 und 14, **dadurch gekennzeichnet, dass** die Reflexionsflächen in Richtung der Strömung stärker ausgebildet sind, wobei insbesondere der Abstand .der Reflexionsflächen zur Rohrmittelachse mit der Strömungsrichtung (A) abnimmt.

## Claims

1. Ultrasonic flowmeter (1) for determining the flow velocity or the volume flow of a fluid according to the transit time difference principle, particularly of a gas or a liquid, said flowmeter comprising a measuring tube (11) with a straight measuring tube axis, at least a first converter (2, 17) to transmit an acoustic signal (5, 10), at least a second converter (3, 18) to receive the acoustic signal (5, 10) and at least one reflection surface (4a, 12-16) to reflect the acoustic signal,
wherein the first converter (2, 17) and the second converter (3, 18) are arranged on the measuring tube wall (6, 11) in such a way that they transmit or receive the acoustic signal (5, 10) at an angle or perpendicularly to the flow direction (A) of the fluid, wherein the acoustic signal runs between the first converter and the second converter along a signal path, which comprises a reflection at the at least one reflection surface (4a, 12-16),
**characterized in that**
the at least one reflection surface (4a, 12-16) is designed in a concave manner in at least one preferential direction in the measuring tube,
wherein at least one reflection surface (4a, 12-16) designed in a concave manner is designed as a component (4), said component being inserted in a detachable manner in the measuring tube (5), and
wherein the converters are positioned in a first and a second opening of the measuring tube, and wherein the component is positioned in a third opening, which is physically separated from the first and second opening.

2. Ultrasonic flowmeter as claimed in Claim 1, **characterized in that** multiple reflection surfaces (12-16) are arranged in the measuring tube (6, 11) for the purpose of the multiple reflection of the acoustic signal, wherein at least one reflection surface (12-16) is designed in a concave manner.

3. Ultrasonic flowmeter as claimed in Claim 2, **characterized in that** all the reflection surfaces (12-16) are designed in a concave manner.

4. Ultrasonic flowmeter as claimed in one of the previous claims, **characterized in that** the acoustic signals (5, 10) can be measured with a ratio (v_{F}/c) of a flow velocity v_{F} of the fluid to a velocity c of the acoustic signal in the fluid of more than 0.1 %.

5. Ultrasonic flowmeter as claimed in one of the previous claims, **characterized in that** the acoustic signals (5, 10) can be measured with a ratio (v_{F}/c) of a flow velocity v_{F} of the fluid to a velocity c of the acoustic signal in the fluid of more than 1 % with a signal attenuation (5, 10) of less than 20 %, particularly of less than 10 %.

6. Ultrasonic flowmeter as claimed in one of the previous claims, **characterized in that** the first converter (2, 17) and the second converter (3, 18) are each designed as ultrasonic converters for the generation and reception of acoustic signals (5, 10).

7. Ultrasonic flowmeter as claimed in one of the previous claims, which has multiple reflection surfaces with a concave contour, wherein a first curvature radius in the centre of a first reflection surface on a first reflection plane of a reflection of an idealized signal path at a first reflection surface deviates from a second curvature radius in the centre of a second reflection surface on a second reflection plane of a reflection of the idealized signal path at the second reflection surface, wherein the idealized signal path runs in a straight line between the centers of the transmission and reception surfaces of the ultrasonic converters and the centers of the reflection surfaces.

8. Ultrasonic flowmeter as claimed in one of the previous claims, **characterized in that** at least one reflection surface has a concave parabolic contour.

9. Ultrasonic flowmeter as claimed in one of the previous claims, wherein a first curvature radius in the centre of a first reflection surface on a first reflection plane of an idealized signal path of a reflection at the first reflection surface deviates from a second curvature radius in the centre of the first reflection surface on a second plane, which is perpendicular to the first reflection plane, and in which the surface normal of the first reflection surface is located in the center of the first reflection surface.

10. Method to determine the flow velocity or volume flow of a fluid according to the transit time difference principle using an ultrasonic flowmeter as claimed in one of the previous claims, with ultrasonic flow measurement in a measuring tube (6, 11) with a straight measuring tube axis, **characterized by** the following steps:
a) Transmission of at least one acoustic signal (5, 10) at an angle or perpendicular to the flow direction (A) of the fluid by a transmitter (2, 17) ;
b) Reflection of the acoustic signal (5, 10) at one or more concave reflection surfaces (4a, 12-16) and
c) Reception and evaluation of the acoustic signal (5, 10) to determine the flow velocity of the fluid.

11. Method as claimed in Claim 10, **characterized in that**, as a result of the reflection of the acoustic signal (5, 10) at one or more concave reflection surfaces (4a, 12-16) the acoustic signal is deflected in such a way that
the angle of incidence σ of the acoustic signal (5, 10) before the reflection and
the angle of reflection β of the acoustic signal (5, 10) after the reflection, in relation to the interior wall (7) of the measuring tube (6), differ from one another.

12. Method as claimed in Claim 10 or 11, **characterized in that** the acoustic signal (5, 10) is focused as a result of the reflection of the acoustic signal (5, 10) at one or more concave reflection surfaces (4a, 12-16).

13. Ultrasonic flowmeter as claimed in one of the Claims 1 to 9, wherein at least two reflection surfaces have surface dimensions that differ from one another.

14. Ultrasonic flowmeter as claimed in one of the Claims 1 to 9 and 13, **characterized in that** at least one reflection surface has a larger extension in a preferential direction than in other directions.

15. Ultrasonic flowmeter as claimed in one of the Claims 1 to 9, 13 and 14, **characterized in that** the reflection surfaces have a thicker design in the direction of flow, wherein, in particular, the distance of the reflection surfaces to the tube central axis decreases with the flow direction (A).

## Revendications

1. Débitmètre à ultrasons (1) destiné à la détermination de la vitesse d'écoulement ou du débit volumique d'un fluide selon le principe de la différence des temps de transit, notamment d'un gaz ou d'un liquide, lequel débitmètre comporte un tube de mesure (11) avec un axe de tube de mesure droit, au moins un premier convertisseur (2, 17) destiné à l'émission d'un signal acoustique (5, 10), au moins un deuxième convertisseur (3, 18) destiné à la réception du signal acoustique (5, 10) et au moins une surface de réflexion (4a, 12-16) destinée à la réflexion du signal acoustique,
le premier convertisseur (2, 17) et le deuxième convertisseur (3, 18) étant disposés sur la paroi du tube de mesure (6, 11) de manière à ce qu'ils émettent et reçoivent le signal acoustique (5, 10) obliquement ou perpendiculairement par rapport au sens d'écoulement (A) du fluide, le signal acoustique passant entre le premier convertisseur et le deuxième convertisseur le long d'un trajet de signal, lequel comprend une réflexion sur l'au moins une surface de réflexion (4a, 12-16),
**caractérisé**
**en ce que** l'au moins une surface de réflexion (4a, 12-16) est conçue de façon concave dans au moins une direction préférentielle à l'intérieur du tube de mesure,
au moins une surface de réflexion (4a, 12-16) conçue de façon concave étant constituée en tant que composant (4), lequel composant est inséré de façon amovible dans le tube de mesure (5), et
les convertisseurs étant positionnés dans une première et dans une deuxième ouverture du tube de mesure, et le composant étant positionné dans une troisième ouverture, séparée physiquement de la première et de la deuxième ouverture.

2. Débitmètre à ultrasons selon la revendication 1, **caractérisé en ce que** sont disposées, dans le tube de mesure (6, 11), plusieurs surfaces de réflexion (12-16) en vue d'une réflexion multiple du signal acoustique, au moins une surface de réflexion (12-16) étant conçue de manière concave.

3. Débitmètre à ultrasons selon la revendication 2, **caractérisé en ce que** toutes les surfaces de réflexion (12-16) sont conçues de manière concave.

4. Débitmètre à ultrasons selon l'une des revendications précédentes, **caractérisé en ce que** les signaux acoustiques (5, 10) sont mesurables dans le cas d'un rapport (v_{F}/c) entre une vitesse d'écoulement v_{F} du fluide et une vitesse c du signal acoustique dans le fluide, supérieur à 0,1 %.

5. Débitmètre à ultrasons selon l'une des revendications précédentes, **caractérisé en ce que** les signaux acoustiques (5, 10) sont mesurables dans le cas d'un rapport (v_{F}/c) entre une vitesse d'écoulement v_{F} du fluide et une vitesse c du signal acoustique dans le fluide, de plus de 1 % avec affaiblissement du signal (5, 10) de moins de 20 %, notamment de moins de 10 %.

6. Débitmètre à ultrasons selon l'une des revendications précédentes, **caractérisé en ce que** le premier convertisseur (2, 17) et le deuxième convertisseur (3, 18) sont chacun conçus en tant que convertisseurs à ultrasons pour la génération et la réception de signaux acoustiques (5, 10).

7. Débitmètre à ultrasons selon l'une des revendications précédentes, lequel débitmètre comporte plusieurs surfaces de réflexion avec un contour concave, un premier rayon de courbure au centre d'une première surface de réflexion dans un premier plan d'une réflexion d'un trajet de signal idéalisé sur la première surface de réflexion différant d'un deuxième rayon de courbure au centre d'une deuxième surface de réflexion dans un deuxième plan d'une réflexion d'un trajet de signal idéalisé sur la deuxième surface de réflexion, le trajet de signal idéalisé s'étendant respectivement de manière rectiligne entre les centres des surfaces d'émission et de réception des convertisseurs à ultrasons et les centres des surfaces de réflexion.

8. Débitmètre à ultrasons selon l'une des revendications précédentes, **caractérisé en ce qu'**au moins une surface de réflexion présente un contour parabolique concave.

9. Débitmètre à ultrasons selon l'une des revendications précédentes, pour lequel un premier rayon de courbure au centre d'une première surface de réflexion dans un premier plan d'une réflexion d'un trajet de signal idéalisé sur la première surface de réflexion diffère d'un deuxième rayon de courbure au centre de la première surface de réflexion dans un deuxième plan, lequel est perpendiculaire au premier plan de réflexion, et dans lequel se situe la normale de la première surface de réflexion au centre de la première surface de réflexion.

10. Procédé destiné à la détermination de la vitesse d'écoulement ou du débit volumique d'un fluide selon le principe de la différence des temps de transit, au moyen d'un débitmètre à ultrasons selon l'une des revendications précédentes, au moyen d'une mesure de débit par ultrasons dans un tube de mesure (6, 11) avec un axe de tube de mesure droit, **caractérisé par** les étapes suivantes :
a) Émission d'au moins un signal acoustique (5, 10) obliquement ou perpendiculairement au sens d'écoulement (A) du fluide par un émetteur (2, 17) ;
b) Réflexion du signal acoustique (5, 10) sur une ou plusieurs surfaces de réflexion (4a, 12-16) concaves et
c) Réception et exploitation du signal acoustique (5, 10) en vue de la détermination de la vitesse d'écoulement du fluide.

11. Procédé selon la revendication 10, **caractérisé en ce que**, par la réflexion du signal acoustique (5, 10) sur une ou plusieurs surfaces de réflexion (4a, 12-16) concaves, intervient une déviation du signal acoustique, de telle sorte que
l'angle d'incidence σ du signal acoustique (5, 10) avant la réflexion et
l'angle de réflexion β du signal acoustique (5, 10) après la réflexion, par rapport à la paroi intérieure (7) du tube de mesure (6), sont différents l'un de l'autre.

12. Procédé selon la revendication 10 ou 11, **caractérisé en ce que**, par la réflexion du signal acoustique (5, 10) sur une ou plusieurs surfaces de réflexion (4a, 12-16) concaves, une focalisation du signal acoustique (5, 10) a lieu.

13. Procédé selon l'une des revendications 1 à 9, pour lequel au moins deux surfaces de réflexion présentent des unités de surface différentes l'une de l'autre.

14. Procédé selon l'une des revendications 1 à 9 et 13, **caractérisé en ce qu'**au moins une surface de réflexion présente dans une direction préférentielle une étendue supérieure que dans les autres directions.

15. Procédé selon l'une des revendications 1 à 9, 13 et 14, **caractérisé en ce que** les surfaces de réflexion sont dotées d'une épaisseur supérieure en direction de l'écoulement, ce par quoi notamment la distance des surfaces de réflexion par rapport à l'axe médian du tube diminue avec la direction d'écoulement (A).
